# EUROPEAN PATENT APPLICATION

(11) **EP 2 087 987 A1**
(43) Date of publication of application: **12.08.2009**
(21) Application number: 07807550.4
(22) Date of filing: 19.09.2007
(51) Int. Cl.: B29C 47/52, B29K 21/00, B29L 30/00

(54) **GEAR EXTRUDER FOR RUBBER**

(30) Priority: 06.11.2006 JP 2006300231
(71) Applicant: Bridgestone Corporation, Tokyo 104-8340 (JP)
(72) Inventor: MATSUYAMA, Fumihiro, Kodaira-shi Tokyo 187-8531 (JP)
(74) Representative: Whalley, Kevin
(86) International application number: PCT/JP2007/068175
(87) International publication number: WO 2008/056488

(57) **Abstract**

The present invention provides a gear type extruder for rubber, which is capable of preventing deterioration of tire uniformity level such as RFV caused by pulse-like changes in rubber extrusion rate during extruding a ribbon-shaped rubber from the gear type extruder. Gears 11, 12, 21, 22 are structured as helical gears, of which flow rate profiles, representing temporal changes in discharge flow rate of rubber discharged by the tooth of respective gears, are respectively represented by a trapezoidal profile constituted of a flow rate monotonously increasing portion, a constant flow rate portion following the monotonously increasing portion, and a flow rate monotonously decreasing portion following the constant flow rate portion. Further, the helical gears are arranged such that, in a pair of flow rate profiles formed sequentially by adjacent tooth, the flow rate profiles overlap each other only in the flow rate decreasing portion of the flow rate profile formed earlier and the flow rate increasing portion of the flow rate profile formed later.

## Description

### Technical Field

The present invention relates to a gear type extruder for rubber for extruding a ribbon-shaped rubber, particularly to a gear type extruder for rubber which is capable of improving tire quality.

### Prior Art

There has been conventionally known a tire building method of, in building a tire, winding a ribbon-shaped rubber extruded from a small type extruder directly on a rotating tire which is being built and laminating the ribbon-shaped rubber to form a rubber member having a predetermined sectional shape as a component of a tire, in order to make extrusion facilities relatively small, improve tire uniformity and adapt to small-lot-multi-size production (see JP-10 058522).

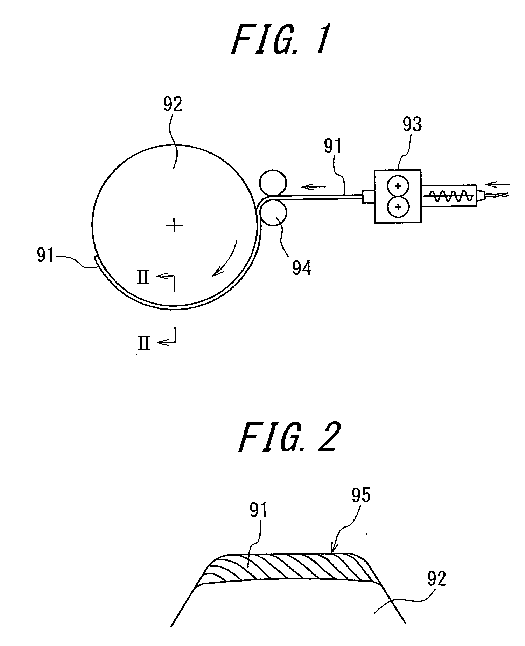

Fig. 1 is a schematic view showing a method of forming a rubber member by winding a ribbon-shaped rubber. Fig. 2 is a schematic sectional view showing a rubber member formed by the method shown in Fig. 1, taken along line II-II in Fog. 1. This method of building a tire includes extruding a ribbon-shaped rubber 91 for a tire component member from an extruder 93, directly guiding the extruded ribbon-shaped rubber on a tire 92, rotating the tire 92 with pressing the ribbon-shaped rubber 91 on the tire 92 by using a stitching roller 94, thereby winding the ribbon-shaped rubber 91 on the tire 92 to form a rubber member 95.

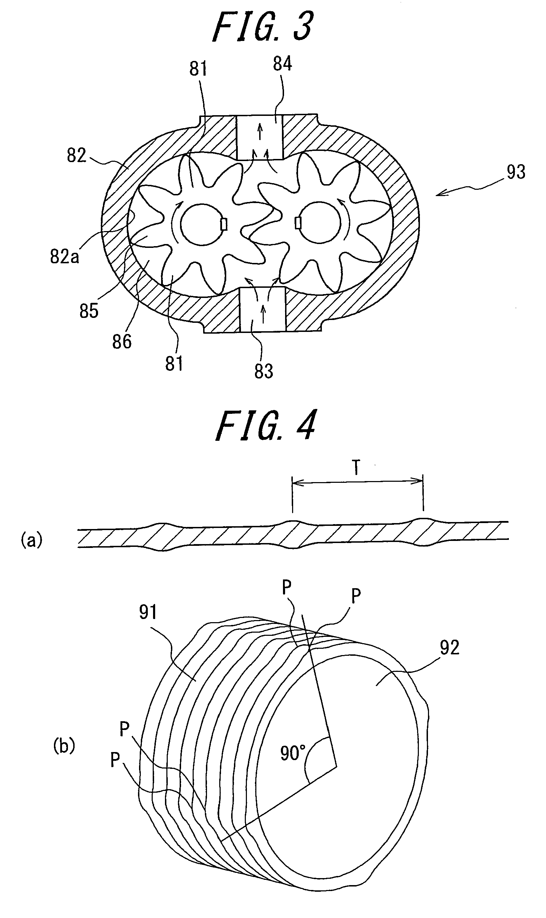

As the extruder 93, a gear type extruder is used which is capable of discharging rubber at a constant rate without depending on plasticity, temperature of the rubber, and the like. Fig. 3 is a sectional view schematically showing an internal structure of the gear type extruder. The extruder 93 is structured to accommodate rubber, swallowed from an inlet 83, in a space 86 formed by a casing wall faces 82a and gear tooth 85 by rotating a pair of gears engaging with each other provided in a casing 82, move the rubber in the space to the outlet by rotation of the gears 81 and extrude the rubber from the outlet 84.

### Disclosure of the Invention

### Problems to be solved by the Invention

When the gears of the gear type extruder 93 as described above is rotated at a constant rotational speed, the average extrusion rate of the rubber can be kept constant. However, by scrutinizing change in the rubber extrusion rate over time (temporal change in the rubber extrusion rate), it is found that the rubber extrusion rate exhibits intermittent pulse-like changes in accordance with the number of tooth of the gears. Due to these pulse-like changes in the rubber extrusion rate, cyclic variations (i.e. the pulse-like changes) in weight are generated in the extruded ribbon-shaped rubber 91 in the longitudinal direction thereof. These pulse-like changes in the ribbon-shaped rubber may cause pulse-like changes in weight in the circumferential direction in the rubber member 95 formed by winding the ribbon-shaped rubber 91 on the tire at least one turn in the circumferential direction of the tire.

In particular, in a case in which a length obtained as the product of the period of the pulse-like changes in the longitudinal direction in the ribbon-shaped rubber 91 and an integer n substantially coincides with the winding circumference of the rubber 91 on the tire, n peaks of pulse-like changes in the ribbon-shaped rubber are generated in each of plural windings and these peaks of the pulse-like changes of the respective windings are aligned for each of n peaks at substantially the same (angular) positions in the circumferential direction. If a tire is formed by using such a tire rubber member 95, n-order RFV (radial force variation) components will be generated in the tire.

For example, when the gears 81 each having fifteen tooth in the gear type extruder 93 are rotated at 25 rpm to extrude the ribbon-shaped rubber 91 and this ribbon-shaped rubber 91 is wound, synchronous with the extrusion of the ribbon-shaped rubber 91, around the tire 92 which is being built and rotated at 94 rpm, such that the winding circumference of the ribbon-shaped rubber 91 is 1980 mm, as shown in Fig. 4(a), there arise variations in weight, having a period T of (1980x94)/(25x 15) = 496 (mm), in the longitudinal direction of the ribbon-shaped rubber 91. Therefore, when the tire component member 95 is formed by winding the ribbon-shaped rubber 91 on the tire 92, which is being built, by plural times, as shown in Fig. 4(b), peaks P of variations in weight of the respective windings of the ribbon-shaped rubber 91 on the tire 92 are aligned, for each of peaks in one winding, at substantially the same positions in the circumferential direction. Since the period, i.e. 496 mm, of the peak is substantially a quarter of the circumference, i.e. 1980 mm, four peaks appear with respect to one circumference of the tire. As a result, four-order RFV will be generated when this product tire is rotated for running.

The present invention has been contrived in view of the problem as described above. An object of the present invention is to provide a gear type extruder for rubber, which is capable of preventing deterioration of tire uniformity level such as RFV caused by pulse-like changes in rubber extrusion rate during extrusion of a ribbon-shaped rubber from the gear type extruder.

### Means for solving the Problems

The present invention provides a gear type extruder for rubber having gears in a casing, the gears being respectively supported rotatably around a pair of parallel axes such that the gears engage with each other, the gear type extruder for rubber being adapted to continuously discharge rubber accommodated between adjacent tooth of the gears from the casing, by rotating the gears, to extrude a ribbon-shaped rubber, **characterized in that**: the gears are structured as helical gears, of which flow rate profiles, representing temporal changes in discharge flow rate of rubber discharged by the tooth of respective gears, are respectively expressed by a trapezoidal profile including a flow rate monotonously increasing portion, a constant flow rate portion following the monotonously increasing portion, and a flow rate monotonously decreasing portion following the constant flow rate portion; and the helical gears are arranged such that, in a pair of flow rate profiles formed sequentially by adjacent tooth, the flow rate profiles overlap each other only in the flow rate decreasing portion of the flow rate profile formed earlier and the flow rate increasing portion of the flow rate profile formed later.

### Effect of the Invention

According to the present invention, since helical gears are used as the gears carrying rubber, the flow rate profile thereof exhibits a trapezoidal shape having a constant flow rate portion. Further, in a pair of flow rate profiles formed sequentially by adjacent tooth of the gears, the flow rate profiles are arranged to overlap each other only in the flow rate monotonously decreasing portion of the flow rate profile formed earlier and the flow rate monotonously increasing portion of the flow rate profile formed later. As a result, the sum total of flow rates of the pair of flow rate profiles reliably retains the original constant flow rate in a time region exclusively constituted of each constant flow rate portion and obtains a sum total flow rate close to the flow rate in the constant flow rate portion in a time region where the flow rate monotonously decreasing portion of the flow rate profile formed earlier overlaps the flow rate monotonously increasing portion of the flow rate profile formed later, as well, due to the monotonously decreasing flow rate and the monotonously increasing flow rate are summed up. That is, as a whole, it is possible to obtain a rubber discharge wave forms having extremely small pulse-like changes.

### Brief Description of the Drawings

Fig. 1 is a schematic view showing a method of forming a rubber member by winding of a ribbon-shaped rubber.
Fig. 2 is a schematic view showing a section of the rubber member, taken along line II-II of Fig. 1.
Fig. 3 is a sectional view schematically showing an internal structure of a conventional gear type extruder.
Fig. 4(a) is a sectional view in the longitudinal direction of the ribbon-shaped rubber. Fig. 4(b) is a perspective view showing a state in which the ribbon-shaped rubber is wound around a tire which is being built.
Fig. 5 is a perspective view showing gears of a gear type extruder for rubber according to the present invention.
Fig. 6 is a sectional view of the gears shown in a state in which the gears are accommodated in a casing.
Fig. 7 is a development view, in which the outer peripheral face of the gear of the gear type extruder for rubber, viewed from the radial direction outer side, is developed in a plain to show arrangements of gear tooth.
Fig. 8 is a development view, in which the outer peripheral face of a gear of the gear type extruder for rubber (the gear has a different gear teeth inclination angle from the present invention), viewed from the radial direction outer side, is developed in a plain to show arrangements of gear tooth.
Fig. 9 is a graph representing changes in flow rate of rubber.

### Explanation of Reference Numerals

- 1: Gear type extruder for rubber
- 3: Casing
- 3a: Wall face of casing
- 4: Inlet
- 5: Outlet
- 6, 7: Space
- 11: Gear
- 14: Axis
- 15, 15a: Ridge line
- 16, 16a: Valley line
- 17: Flow rate monotonously increasing portion
- 18: Constant flow rate portion
- 19: Flow rate monotonously decreasing portion
- 21: Gear
- 24: Axis
- 25, 25a: Projection line
- 26, 26a: Projection line
- 31: Pair of gears
- 28, 28a, 28f, 28r: Flow rate profile

### Best Mode for carrying out the Invention

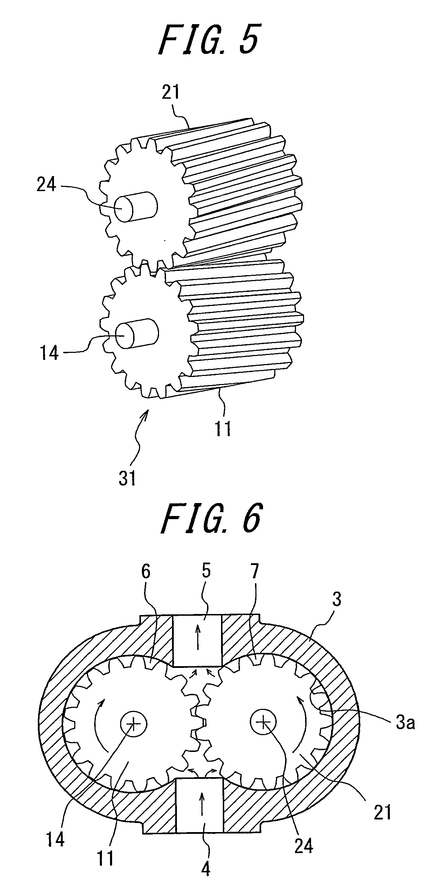

The present invention will be described with reference to the drawings. Fig. 5 is a perspective view showing gears of a gear type extruder for rubber. Fig. 6 is a sectional view showing the gears in a state in which the gears are arranged in a casing.

The gear type extruder 1 for rubber includes a plurality of gears 11, 21 provided on a pair of parallel axes 14, 24 in a casing 3 such that the gears engage with each other. The gear 11 and the gear 24 are provided on the axis 14 and the axis 24, respectively, to constitute a pair of gears 31 engaging with each other.

By rotation of the gears 11,21, rubber swallowed from an inlet 4 is accommodated in spaces 6, 7 defined by a wall face 3a of the casing and tooth of the respective gears 11,21, carried from the inlet 4 toward an outlet 5, and extruded as a ribbon-shaped rubber from the outlet 5. Since the method of forming a tire component member from the extruded ribbon-shaped rubber is the same as that described in context with the prior art, detailed explanation thereof will be omitted.

In the present invention, the pair of gears are constituted of helical gears in which gear tooth are inclined with respect to the axial direction of the gears.

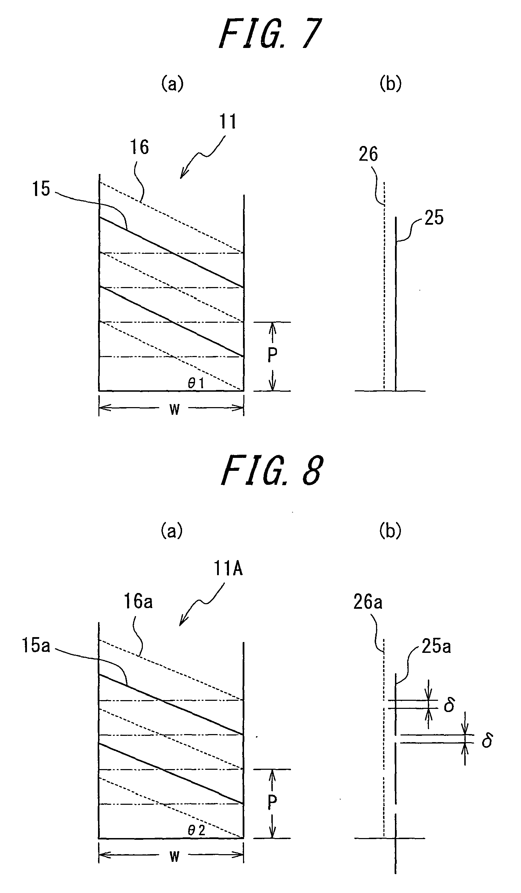

Fig. 7(a) is a development arrangement view, in which the outer peripheral face of one of the gears, e.g. the gear 11, of the gear type extruder 1 for rubber of the present invention is developed in a plain and the arrangements of gear tooth are shown in the plain. In the drawing, an inclined solid line represents a ridge line 15 of a mountain portion of a gear teeth, while an inclined broken line represents a valley line 16 plotting a bottom of a valley portion. Both the ridge line 15 and the valley line 16 extend along a line inclined with respect to the axis 14 by an inclination angle θ1. Given that the width of the gear 11 is w and the pitch thereof is p, the width w is 68 mm, the pitch p is 33.190 mm and the angle θ1 is 26.1° in the example shown in the drawing.

Fig. 7(b) is a view showing respective projection lines of the ridge lines 15 and the valley lines 16 on a plain normal to the axis 14. As understood from the formula (1), projections lines 25, respectively corresponding to adjacent gear tooth, characteristically overlap each other to form one straight line. Similarly, projections lines 26, respectively corresponding to adjacent gear tooth, characteristically overlap each other to form one straight line.

In contrast, Fig. 8(a) is a development arrangement view showing, in a manner similar to that of Fig. 7(a), the arrangements of gear tooth of a gear type extruder having a gear 11A of which structure is different from that of the present invention. Specifically, the gear type extruder of Fig. 8(a), as compared with the gear type extruder 1 for rubber of the present invention, has the same gear width w and pitch p but a different inclination angle θ2 of the ridge line 15a and the valley line 16a of the helical gear 11A with respect to the axis 14. In the example shown in Fig. 8(a), the width w is 68 mm, the pitch p is 33.190 mm and the inclination angle θ is 22.5°.

Fig. 8(b) shows projection lines of the ridge lines 15a and the valley lines 16a on a plane normal to the axis 14. As shown in Fig. 8(b), projection lines 25a, respectively corresponding to adjacent gear tooth, never overlap each other as one line and are arranged with an interval δ therebetween. Similarly, projection lines 26a, respectively corresponding to adjacent gear tooth, never overlap each other as one line and are arranged with an interval δ therebetween.

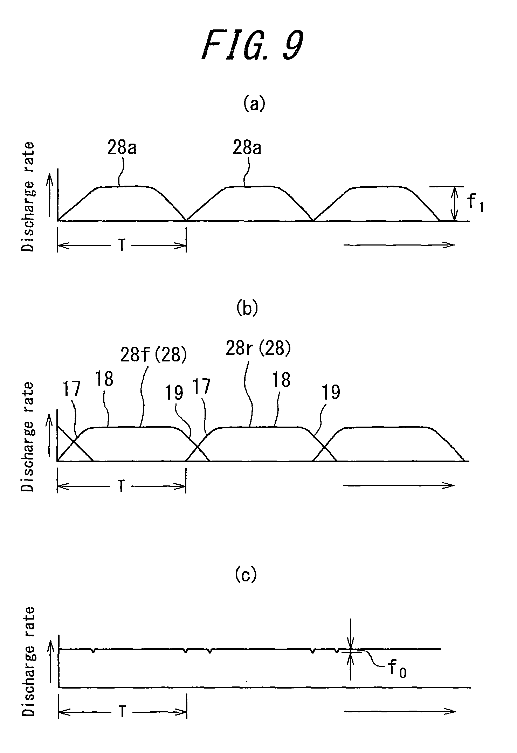

Fig. 9(a) and Fig. 9(b) are graphs representing changes in rubber flow rate, expressed by time lapse plotted against X and rubber flow rate (discharge rate), obtained at the outlet 5 when the gears 11, 11A having the tooth arrangement as shown in Fig. 7(a) or Fig. 8(a) are rotated, plotted against Y. Fig. 9(a) represents changes in flow rate of rubber extruded by the gear 11A shown in Fig. 8(a). Fig. 9(b) is a graph showing flow rate profiles of respective adj acent gear tooth of the helical gear 11 in a manner that the respective flow rate profiles are juxtaposed along the time axis. Fig. 7(c) is a graph showing changes in rubber flow rate corresponding to the gear 11, obtained by summing up the flow rate profiles of Fig. 7(b).

In the present specification, a "flow rate profile" is defined to represent changes in rubber flow rate when rubber, accommodated in spaces formed between a pair of adjacent gear tooth, is discharged from the outlet. In a case of rubber discharged by helical gears, a flow rate profile thereof is constituted of a trapezoidal profile in which a flow rate monotonously increasing portion where the flow rate monotonously increases from zero to the maximum value, a constant flow rate portion where the flow rate remains constant at the maximum value, and a flow rate monotonously decreasing portion where the flow rate monotonously decreases from the maximum value to zero, are linked in this order.

In a case in which the projection lines 25a, 26a, respectively corresponding to one gear teeth, are shorter than the pitch p of the gear, such as in the gear 11A, as shown in Fig. 9(a), the adjacent flow rate profiles 28a corresponding to the adjacent gear tooth do not overlap each other in the time lapse direction. Accordingly, there arises discontinuity in flow rate every time when a gear portion corresponding to each cleavage of the projection lines 25a, 26a is located at the outlet, whereby pulse-like changes in flow rate, of relatively large amplitude f₁, are generated.

In contrast, in the gear 11 of the present invention, as shown in Fig. 9(b), each of the flow rate profiles 28 respectively corresponding to the gear tooth has a trapezoidal shape, is constituted of a flow rate monotonously portion 17, a constant flow rate portion 18 and a flow rate monotonously decreasing portion 19, and designed such that, among the flow rate profiles 28 corresponding to the respective adjacent gear tooth, the flow rate monotonously decreasing portion 19 of one flow rate profile 28f, which appears earlier, overlaps the flow rate monotonously increasing portion 17 of a subsequent flow rate profile 28r appearing later in the time lapse axis. Ideally, by making the flow rate monotonously increasing portion 17 and the flow rate monotonously decreasing portion 19 substantially coincide with each other in the time lapse axis, it is possible to make the sum total of flow rates of these portions 17, 19 substantially coincide with the constant flow rate portion 18, whereby the flow rate as a whole can be made substantially constant as shown in Fig. 9(c), suppressing the amplitude f₀ of pulse-like changes to a very small level.

### Industrial Applicability

The gear type extruder for rubber of the present invention can be applied to extrusion of a ribbon-shaped rubber for a rubber component member of various tires.

## Claims

1. A gear type extruder for rubber having gears in a casing, the gears being respectively supported rotatably around a pair of parallel axes such that the gears engage with each other, the gear type extruder for rubber being adapted to continuously discharge rubber accommodated between adjacent tooth of the gears from the casing, by rotating the gears, to extrude a ribbon-shaped rubber, **characterized in that:**
the gears are structured as helical gears, of which flow rate profiles, representing temporal changes in discharge flow rate of rubber discharged by the tooth of respective gears, are respectively expressed by a trapezoidal profile including a flow rate monotonously increasing portion, a constant flow rate portion following the monotonously increasing portion, and a flow rate monotonously decreasing portion following the constant flow rate portion; and
the helical gears are arranged such that, in a pair of flow rate profiles formed sequentially by adjacent tooth, the flow rate profiles overlap each other only in the flow rate decreasing portion of the flow rate profile formed earlier and the flow rate increasing portion of the flow rate profile formed later.
